# EUROPEAN PATENT APPLICATION

(11) **EP 3 932 979 A1**
(43) Date of publication of application: **05.01.2022**
(21) Application number: 20763069.0
(22) Date of filing: 21.02.2020
(51) Int. Cl.: C08K 5/09, C08L 23/02, C08L 101/00, C08K 3/00

(54) **WATERPROOF COMPONENT, ELECTRONIC EQUIPMENT COMPRISING SAME, WATERPROOFING METHOD USING INSERT-MOLDED BODY, AND WATERPROOFING METHOD FOR ELECTRONIC EQUIPMENT**

(30) Priority: 25.02.2019 JP 2019032007
(71) Applicant: Kuraray Co., Ltd., Kurashiki-shi, Okayama 710-0801 (JP)
(72) Inventor: SUGAI, Naoto, Tsukuba-shi, Ibaraki 305-0841 (JP); SHIGEMATSU, Takaharu, Tsukuba-shi, Ibaraki 305-0841 (JP)
(74) Representative: Müller-Boré & Partner Patentanwälte PartG mbB
(86) International application number: PCT/JP2020/007175
(87) International publication number: WO 2020/175390

(57) **Abstract**

The present invention relates to a waterproof component that is an insert molded body formed from a thermoplastic resin composition and a metal component, wherein
the thermoplastic resin composition contains a thermoplastic resin (A), an inorganic reinforcement (B), and a polyolefin (C1) or a long-chain fatty acid-based compound (C2); and
the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).

The present invention also relates to an electronic device provided with the same.

## Description

### Technical Field

The present invention relates to a waterproof component and an electronic device provided with the same, a waterproofing method using an insert molded body, and a method for waterproofing an electronic device, etc.

### Background Art

In recent years, electronic devices, such as smartphones, have been frequently required to have waterproofness. An external connection terminal of such an electronic device is typically a composite of a resin or a resin composition and a metal component. In many cases, the metal component is exposed to the outside, and the waterproofness on a joint surface between the resin or resin composition and the metal is of a problem. At the same time, as for a method for producing a printed circuit board having an electronic component joined thereto, the usage of surface mounting in which a lead-free solder paste is printed on a printed circuit board, and an electronic component is then mounted thereon, followed by heating in a reflow furnace at about 260°C at which the lead-free solder is melted is expanding. According to the surface mounting, downsizing or improvement in productivity of the printed circuit board can be achieved; however, in the mounted component, in the reflow process and the sequent cooling process, a stress is generated according to a difference in the expansion and shrinkage characteristics between the metal component and the resin or resin composition, and a minute gap is liable to be generated between the metal component and the resin or resin composition, so that it is difficult to maintain the waterproofness.

For that reason, as a waterproofing method in such an external connection terminal, there have hitherto been known a method of using a sealing material, such as an elastic body; surface modification by chemical etching of the metal surface at the time of insert molding; and so on (see PTLs 1 and 2, etc.). However, there were involved such problems that the component cannot be completed through a single process, and the costs increase because of installation of the elastic body or metal surface etching.

Then, there is proposed a production method of a waterproof component through insert molding by subjecting a metal component having been inserted into a die to injection molding with a resin or a resin composition, thereby undergoing integral joining (see PTLs 3, 4, and 5, etc.).

For example, PTL 3 discloses a polyamide resin composition containing a rubbery polymer, a branched polyester, and so on and a resin metal composite composed of the foregoing resin composition. In addition, PTL 4 discloses a polyamide resin composition containing a specified branched compound, a filler, an impact resistance improving material, and so on and a resin metal composite composed of the foregoing resin composition.

PTL 5 discloses a polyamide resin composition containing at least one additive selected from the group consisting of a magnesium compound, a glass fiber, a fatty acid metal salt, an amide group-containing compound, and a maleic anhydride group-containing compound, and so on, and the foregoing resin composition.

### Citation List

### Patent Literature

PTL 1: JP 2002-33155 A
PTL 2: WO 2010/107022 A
PTL 3: JP 2013-249363 A
PTL 4: JP 2014-141630 A
PTL 5: JP 2015-36415 A

### Summary of Invention

### Technical Problem

However, the resins which are used for the resin compositions of PTLs 3 and 4 are low in heat resistance, so that when applied for surface mounting, there was occasionally caused deformation or melting in the reflow process. In addition, by adding the rubbery polymer component, there may be the case where the heat resistance and the mechanical strength are lowered, and a burry increases.

In PTL 5, the water resistance is evaluated as the insulating properties after water absorption, but the water permeability is not evaluated. Furthermore, all of the aforementioned patent literatures do not suggest at all the reflow process passability. For that reason, a problem remained in making both the reflow process passability and the waterproofness compatible with each other on the surface mounting.

That is, a problem of the present invention is to provide a waterproof component that is an insert molded body, which has sufficient waterproofness even after a heating process, such as a reflow process, and an electronic device provided with the same.

### Solution to Problem

As a result of extensive and intensive investigations, the present inventors have found that in a waterproof component that is an insert molded body formed from a thermoplastic resin composition and a metal component, the waterproofness after a reflow process is improved by adding a specified amount of a specified olefinic compound to a thermoplastic resin to be used, and further made investigations on the basis of such finding, thereby leading to accomplishment of the present invention.

The present invention relates to the following [1] to [16].
[1] A waterproof component that is an insert molded body formed from a thermoplastic resin composition and a metal component, wherein
   the thermoplastic resin composition contains a thermoplastic resin (A), an inorganic reinforcement (B), and a polyolefin (C1) or a long-chain fatty acid-based compound (C2); and
   the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).
[2] The waterproof component as set forth in [1], wherein the polyolefin (C1) is a polyolefin having been subjected to at least one modification treatment selected from maleic acid modification, oxidation, and polar monomer modification.
[3] The waterproof component as set forth in [1] or [2], wherein the long-chain fatty acid-based compound (C2) is a long-chain fatty acid compound having 15 or more carbon atoms.
[4] The waterproof component as set forth in any of [1] to [3], wherein the long-chain fatty acid-based compound (C2) is a long-chain fatty acid compound having 15 or more carbon atoms, which is a long-chain fatty acid-based compound having been subjected to at least one modification treatment selected from esterification, maleic acid modification, and saponification.
[5] The waterproof component as set forth in any of [1] to [4], wherein a melting point of the thermoplastic resin (A) is 280°C or higher.
[6] The waterproof component as set forth in any of [1] to [5], wherein the thermoplastic resin (A) is at least one selected from the group consisting of a polyamide, a liquid crystal polymer, a polyphenylene sulfide, and a styrenic polymer having a mainly syndiotactic structure.
[7] The waterproof component as set forth in any of [1] to [6], wherein the thermoplastic resin (A) is a polyamide in which 50 to 100 mol% of a diamine unit thereof is an aliphatic diamine unit having 4 to 18 carbon atoms.
[8] The waterproof component as set forth in any of [1] to [7], wherein the inorganic reinforcement (B) is at least one selected from the group consisting of a glass fiber, a milled fiber, wollastonite, mica, a glass flake, and glass beads.
[9] The waterproof component as set forth in any of [1] to [8], wherein the inorganic reinforcement (B) is at least one selected from the group consisting of a milled fiber, wollastonite, and mica.
[10] The waterproof component as set forth in any of [1] to [9], which is used for an application to be applied in a surface mounting process.
[11] The waterproof component as set forth in any of [1] to [10], which is an external connection terminal.
[12] The waterproof component as set forth in any of [1] to [11], which is a switch.
[13] An electronic device provided with the waterproof component as set forth in any of [1] to [12].
[14] The electronic device as set forth in [13], which is a portable electronic device.
[15] A waterproofing method using an insert molded body formed from a thermoplastic resin composition and a metal component, the method including using a thermoplastic resin composition, wherein
   the thermoplastic resin composition contains a thermoplastic resin (A), an inorganic reinforcement (B), and a polyolefin (C1) or a long-chain fatty acid-based compound (C2); and
   the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).
[16] Use for waterproofing an insert molded body formed from a thermoplastic resin composition and a metal component, wherein
   the thermoplastic resin composition contains a thermoplastic resin (A), an inorganic reinforcement (B), and a polyolefin (C1) or a long-chain fatty acid-based compound (C2); and
   the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).
[17] A method for waterproofing an electronic device, including using the waterproof component as set forth in any of [1] to [12] as an external connection terminal.
[18] A method for waterproofing an electronic device, including using the waterproof component as set forth in any of [1] to [12] as a switch.
[19] A method for producing a waterproof component, including subjecting a thermoplastic resin composition and a metal component to insert molding, wherein
   the thermoplastic resin composition contains a thermoplastic resin (A), an inorganic reinforcement (B), and a polyolefin (C1) or a long-chain fatty acid-based compound (C2),
   the thermoplastic resin composition being obtained through melt kneading of the inorganic reinforcement (B) in a use amount of 8 to 130 parts by mass and the polyolefin (C1) or the long-chain fatty acid-based compound (C2) in a use amount of 1.0 to 40 parts by mass based on 100 parts by mass of the thermoplastic resin (A).

### Advantageous Effects of Invention

In accordance with the present invention, it is possible to provide a waterproof component that is an insert molded body, which has sufficient waterproofness even after a heating process, such as a reflow process, and an electronic device provided with the same.

### Brief Description of Drawings

Fig. 1 is a photograph of a sample used for a red ink test in the working examples.
Fig. 2 is a schematic view of an X-X' line cross-sectional view for explaining a red ink test in the working examples.
Fig. 3 is a photograph showing a sample for explaining the judgement of a red ink test in the working examples.

### Description of Embodiments

The present invention is hereunder described in detail.

The waterproof component of the present invention is a waterproof component that is an insert molded body formed from a thermoplastic resin composition and a metal component, wherein
the thermoplastic resin composition contains a thermoplastic resin (A), an inorganic reinforcement (B), and a polyolefin (C1) or a long-chain fatty acid-based compound (C2); and
the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).

By using the aforementioned thermoplastic resin composition, the waterproofness of an insert molded body formed from the thermoplastic resin composition and the metal component (on a joint surface between the thermoplastic resin composition and the metal) is improved, and the waterproofness of the waterproof component becomes sufficient.

Although the reason for this is not always elucidated yet, it may be considered that by using the aforementioned thermoplastic resin composition, the polyolefin (C1) or the long-chain fatty acid-based compound (C2) is melted in the molding process or before and after the heating process, whereby a stress on the joint surface between the thermoplastic resin composition and the metal is relaxed, and the generation of a gap on the joint surface between the thermoplastic resin composition and the metal can be prevented.

### (Thermoplastic Resin (A))

The thermoplastic resin (A) which is used in the present invention is not particularly limited so long as it is able to give the aforementioned effects. Examples thereof include a polycarbonate; a polyphenylene oxide; a polyphenylene sulfide (PPS); a polysulfone; a polyether sulfone; a polyarylate; a cyclic polyolefin; a polyether imide; a polyamide; a polyamide-imide; a polyimide; a liquid crystal polymer, such as an aromatic polyester and an aromatic polyester amide; a polyaminobismaleimide; a polyetheretherketone; and a polystyrene.

Above all, from the viewpoint of dimensional stability and heat resistance, at least one selected from the group consisting of a polyamide, a liquid crystal polymer, PPS, and a styrenic polymer having a mainly syndiotactic structure is preferred, a liquid crystal polymer and a polyamide are more preferred, and a polyamide is still more preferred.

The melting point of the thermoplastic resin (A) is preferably 280°C or higher, more preferably 285°C or higher, and still more preferably 295°C or higher. So long as the melting point of the thermoplastic resin (A) is the aforementioned temperature or higher, even when the waterproof component containing the thermoplastic resin (A) is used for an application to be exposed to a heating process, such as a reflow process, the sufficient waterproofness can be maintained.

### (Polyamide)

The polyamide is preferably one having a dicarboxylic acid unit and a diamine unit.

Examples of the dicarboxylic acid unit include structural units derived from aliphatic dicarboxylic acids, such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid; alicyclic dicarboxylic acids, such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; aromatic dicarboxylic acids, such as terephthalic acid, isophthalic acid, 1,4-naphthalenedicarboxylic acid, 2,6-naphthalenedicarboxylic acid, 2,7-naphthalenedicarboxylic acid, diphenic acid, 4,4'-biphenyldicarboxylic acid, diphenylmethane-4,4'-dicarboxylic acid, and diphenylsulfone-4,4'-dicarboxylic acid; and so on. These units may be either one kind or two or more kinds.

The polyamide can also contain a structural unit derived from a trivalent or higher-valent carboxylic acid, such as trimellitic acid, trimesic acid, and pyromellitic acid, within a range where it is possible to perform melt molding, within a range where the effects of the present invention are not impaired.

The polyamide is preferably one in which 50 to 100 mol% of the diamine unit is an aliphatic diamine unit having 4 to 18 carbon atoms, more preferably one in which 60 to 100 mol% of the diamine unit is an aliphatic diamine unit having 4 to 18 carbon atoms, and still more preferably one in which 90 to 100 mol% of the diamine unit is an aliphatic diamine unit having 4 to 18 carbon atoms.

Examples of the aliphatic diamine unit having 4 to 18 carbon atoms include structural units derived from linear aliphatic diamines, such as 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,4-tetradecanediamine, 1,15-pentadecanediamine, 1,16-hexadecanediamine, 1,17-heptadecanediamine, and 1,18-octadecanediamine; branched aliphatic diamines, such as 1,1-dimethyl-1,4-butanediamine, 1-ethyl-1,4-butanediamine, 1,2-dimethyl- 1,4-butanediamine, 1,3-dimethyl- 1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1, 6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, and 5-methyl-1,9-nonanediamine; and so on. These units may be either one kind or two or more kinds.

Above all, the aliphatic diamine unit is preferably a structural unit derived from at least one selected from the group consisting of 1,4-butanediamine, 1,6-hexanediamine, 2-methyl-1,5-pentanediamine, 1,8-octanediamine, 2-methyl-1,8-octanediamine, 1,9-nonanediamine, 1,10-decanediamine, 1,11-undecanediamine, and 1,12-dodecanediamine; and more preferably a structural unit derived from at least one selected from the group consisting of 1,4-butanediamine, 1,6-hexanediamine, 1,9-nonanediamine, 2-methyl-1,8-octanediamine, and 1,10-decanediamine.

In the case where the diamine unit contains both a structural unit derived from 1,9-nonanediamine and a structural unit derived from 2-methyl-1,8-octanediamine, a molar ratio of the structural unit derived from 1,9-nonanediamine and the structural unit derived from 2-methyl-1,8-octanediamine is preferably in a range of 95/5 to 40/60, and more preferably in a range of 90/10 to 50/50 in terms of a [(structural unit derived from 1,9-nonanediamine)/(structural unit derived from 2-methyl-1,8-octanediamine)] ratio.

Depending upon the application, there may be a case where it is preferred that the [(structural unit derived from 1,9-nonanediamine)/(structural unit derived from 2-methyl-1,8-octanediamine)] ratio is in a range of 55/45 to 45/55.

The diamine unit in the polyamide can contain a diamine unit other than the aliphatic diamine unit having 4 to 18 carbon atoms within a range where the effects of the present invention are not impaired. Examples of such a diamine unit include structural units derived from aliphatic diamines, such as ethylenediamine, 1,2-propanediamine, and 1,3-propanediamine; alicyclic diamines, such as cyclohexanediamine, methylcyclohexanediamine, isophoronediamine, norbornane dimethylamine, and tricyclodecane dimethylamine; aromatic diamines, such as p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether; and so on. These units may be either one kind or two or more kinds.

The polyamide may contain an aminocarboxylic acid unit. Examples of the aminocarboxylic acid unit include units derived from lactams, such as caprolactam and lauryl lactam; aminocarboxylic acids, such as 11-aminoundecanoic acid and 12-aminododecanoic acid; and so on. The content of the aminocarboxylic acid unit in the polyamide is preferably 40 mol% or less, and more preferably 20 mol% or less based on 100 mol% of a sum total of the dicarboxylic acid unit and the diamine unit of the polyamide.

The polyamide may contain an end capping agent-derived unit. The content of the end capping agent-derived unit is preferably 1.0 to 10 mol%, more preferably 2.0 to 7.5 mol%, and still more preferably 2.5 to 6.5 mol% relative to the diamine unit.

In order to allow the end capping agent-derived unit to fall within the aforementioned desired range, such can be performed by charging the end capping agent in the diamine during charging of polymerization raw materials such that the content of the end capping agent-derived unit falls within the aforementioned desired range. Taking into consideration the fact that the monomer components volatilize during the polymerization, it is desired to make fine adjustments to the charge amount of the end capping agent during charging of polymerization raw materials such that the desired amount of the end capping agent-derived unit is introduced into the resulting resin.

Examples of a method of determining the content of the end capping agent-derived unit in the polyamide include a method in which a solution viscosity is measured, the whole end group amount is calculated according to a relational expression thereof to a number average molecular weight, and the amino group amount and the carboxy group amount as determined through titration are subtracted therefrom, as described in JP 07-228690 A; and a method in which using ¹H-NMR, the content of the end capping agent-derived unit in the polyamide is determined on the basis of integrated values of signals corresponding to the diamine unit and the end capping agent-derived unit, respectively.

As the end capping agent, a monofunctional compound having reactivity with the terminal amino group or the terminal carboxy group can be used. Specifically, examples thereof include a monocarboxylic acid, an acid anhydride, a monoisocyanate, a monoacid halide, a monoester, a monoalcohol, and a monoamine. From the viewpoint of reactivity and stability of the endcap, etc., a monocarboxylic acid is preferred as the end capping agent relative to the terminal amino group, and a monoamine is preferred as the end capping agent relative to the terminal carboxy group. In addition, from the viewpoint of easiness of handling, etc., a monocarboxylic acid is more preferred as the end capping agent.

The monocarboxylic acid which is used as the end capping agent is not particularly limited so long as it has reactivity with the amino group. Examples thereof include aliphatic monocarboxylic acids, such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids, such as cyclopentane carboxylic acid and cyclohexane carboxylic acid; aromatic monocarboxylic acids, such as benzoic acid, toluic acid, α -naphthalenecarboxylic acid, β-naphthalenecarboxylic acid, methylnaphthalenecarboxylic acid, and phenylacetic acid; and arbitrary mixtures thereof. Of these, from the standpoint of reactivity, stability of endcap, and price, etc., at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferred.

The monoamine which is used as the end capping agent is not particularly limited so long as it has reactivity with the carboxy group. Examples thereof include aliphatic monoamines, such as methylamine, ethylamine, propylamine, butylamine, hexylamine, octylamine, decylamine, stearylamine, dimethylamine, diethylamine, dipropylamine, and dibutylamine; alicyclic monoamines, such as cyclohexylamine and dicyclohexylamine; aromatic monoamines, such as aniline, toluidine, diphenylamine, and naphthylamine; and arbitrary mixtures thereof. Of these, from the standpoint of reactivity, high boiling point, stability of endcap, and price, etc., at least one selected from the group consisting of butylamine, hexylamine, octylamine, decylamine, stearylamine, cyclohexylamine, and aniline is preferred.

The polyamide can be produced by adopting an arbitrary method known as the method for producing a polyamide. For example, the polyamide can be produced by a method, such as a solution polymerization method or an interfacial polymerization method using an acid chloride and a diamine as raw materials; and a melt polymerization method, a solid phase polymerization method, and a melt extrusion polymerization method each using a dicarboxylic acid and a diamine as raw materials.

The polyamide can be, for example, produced by first collectively adding a diamine and a dicarboxylic acid, and optionally a catalyst or an end capping agent, to produce a nylon salt, and then thermally polymerizing the nylon salt at a temperature of 200 to 250°C to prepare a prepolymer, followed by performing solid phase polymerization, or performing polymerization by using a melt extruder. In the case where the final stage of the polymerization is performed through solid phase polymerization, it is preferred to perform the polymerization under reduced pressure or under an inert gas flow. So long as the polymerization temperature falls within a range of 200 to 280°C, a polymerization rate is large, productivity is excellent, and coloration or gelation can be effectively suppressed. The polymerization temperature in the case of performing the final stage of the polymerization by using a melt extruder is preferably 370°C or lower, and when the polymerization is performed under such a condition, a polyamide which is substantially free from decomposition and less in deterioration is obtained.

Examples of the catalyst which can be used during producing the polyamide include phosphoric acid, phosphorous acid, hypophosphorous acid, and a salt or an ester thereof. Examples of the salt or ester include a salt of phosphoric acid, phosphorous acid, or hypophosphorous acid with a metal, such as potassium, sodium, magnesium, vanadium, calcium, zinc, cobalt, manganese, tin, tungsten, germanium, titanium, and antimony; an ammonium salt of phosphoric acid, phosphorous acid, or hypophosphorous acid; an ethyl ester, an isopropyl ester, a butyl ester, a hexyl ester, an isodecyl ester, an octadecyl ester, a decyl ester, a stearyl ester, a phenyl ester, etc. of phosphoric acid, phosphorous acid, or hypophosphorous acid.

The polyamide may be any of a crystalline polyamide, an amorphous polyamide, and a mixture thereof.

Examples of the crystalline polyamide include polycaproamide (polyamide 6), polyhexamethylene adipamide (polyamide 66), polytetramethylene adipamide (polyamide 46), polyhexamethylene sebacamide (polyamide 610), polyhexamethylene dodecanamide (polyamide 612), polyundecamethylene adipamide (polyamide 116), poly-bis(4-aminocyclohexyl)methane dodecanamide (polyamide PACM 12), poly-bis(3-methyl-4-aminocyclohexyl)methane dodecanamide (polyamide dimethyl PACM 12), polyundecamethylene terephthalamide (polyamide 11T), polyundecamethylene hexahydroterephthalamide (polyamide 11T(H)), polyundecanamide (polyamide 11), polydodecanamide (polyamide 12), polytrimethyl hexamethylene terephthalamide (polyamide TMDT), polymetaxylylene adipamide (polyamide MXD 6), polyhexamethylene terephthalamide (polyamide 6T), polynonamethylene terephthalamide (polyamide 9T), polydecamethylene terephthalamide (polyamide 10T), polyhexamethylene isophthalamide (polyamide 6I), a copolymer of polyamide 6I and polyamide 6T (polyamide 6I/6T), and a copolymer of polyamide 6T and polyundecanamide (polyamide 11) (polyamide 6T/11), and copolymerization products or mixtures thereof. Ones in which a benzene ring of terephthalic acid and/or isophthalic acid is substituted with an alkyl group or a halogen atom are also included in the crystalline polyamide.

Of the aforementioned crystalline polyamides, polyamide 6, polyamide 66, polyamide 11, polyamide 12, polyamide 46, polyamide 6T, polyamide 9T, and polyamide 10T are preferred; polyamide 6, polyamide 66, polyamide 46, polyamide 6T, polyamide 9T, and polyamide 10T are more preferred; and polyamide 46, polyamide 6T, polyamide 9T, and polyamide 10T are still more preferred. The aforementioned crystalline polyamides may be used alone, or plural kinds thereof may be used in combination.

Examples of the amorphous polyamide include a polycondensate of terephthalic acid/isophthalic acid/1,6-hexanediamine, a polycondensate of terephthalic acid/isophthalic acid/1,6-hexanediamine/bis(3-methyl-4-aminocyclohexyl)methane, a polycondensate of terephthalic acid/2,2,4-trimethyl-1,6-hexanediamine/2,4,4-trimethyl-1,6-hexanediamine, a polycondensate of isophthalic acid/bis(3-methyl-4-aminocyclohexyl)methane/ω-laurolactam, a polycondensate of isophthalic acid/2,2,4-trimethyl-1,6-hexanediamine/2,4,4-trimethyl-1,6-hexanediamine, and a polycondensate of terephthalic acid/isophthalic acid/2,2,4-trimethyl-1,6-hexanediamine/2,4,4-trimethyl-1,6-hexanediamine. Ones in which a benzene ring of terephthalic acid and/or isophthalic acid is substituted with an alkyl group or a halogen atom are also included in the amorphous polyamide.

Of the aforementioned amorphous polyamides, a polycondensate of terephthalic acid/isophthalic acid/1,6-hexanediamine, a polycondensate of terephthalic acid/isophthalic acid/1,6-hexanediamine/bis(3-methyl-4-aminocyclohexyl)methane, and a polycondensate of terephthalic acid/2,2,4-trimethyl-1,6-hexanediamine/2,4,4-trimethyl-1,6-hexanediamine are preferred; and a polycondensate of terephthalic acid/isophthalic acid/1,6-hexanediamine and a polycondensate of terephthalic acid/isophthalic acid/1,6-hexanediamine/bis(3-methyl-4-aminocyclohexyl)methane are more preferred. The aforementioned amorphous polyamides may be used alone, or plural kinds thereof may be used in combination.

### (Inorganic Reinforcement (B))

Examples of the inorganic reinforcement (B) which is used in the present invention include a glass fiber, a milled fiber, a cut fiber, wollastonite, a potassium titanate whisker, a calcium carbonate whisker, an aluminum borate whisker, a magnesium sulfate whisker, sepiolite, xonotlite, a zinc oxide whisker, glass beads, spherical silica, a glass balloon, a shirasu balloon, titanium oxide, carbon black, mica, a glass flake, kaolin, talc, and stratiform silicate. These may be used alone or may be used in combination of two or more thereof.

Of the aforementioned inorganic reinforcements (B), at least one selected from the group consisting of a glass fiber, a milled fiber, wollastonite, mica, a glass flake, and glass beads is preferred; at least one selected from the group consisting of a mild fiber, wollastonite, and mica is more preferred; and at least one selected from the group consisting of a milled fiber and wollastonite is still more preferred.

The inorganic reinforcement (B) is preferably fibrous.

In the case where the inorganic reinforcement (B) is fibrous, from the viewpoint of waterproofness, an average fiber diameter is preferably 10 µm or less, more preferably 8 µm or less, and still more preferably 7 µm or less. In addition, from the viewpoint of strength, the average fiber diameter is preferably 2 µm or more, and more preferably 4 µm or more.

From the viewpoint of waterproofness, an average fiber length is preferably 300 µm or less, more preferably 250 µm or less, still more preferably 200 µm or less, and yet still more preferably 150 µm or less. In addition, from the viewpoint of strength, the average fiber length is preferably 20 µm or more, more preferably 30 µm or more, and still more preferably 40 µm or more.

The aforementioned average fiber diameter and average fiber length are those before melt kneading.

In this specification, the "average fiber diameter" means a fiber diameter at a cumulative mass of 50%. The average fiber diameter can be determined by dispersing the inorganic reinforcement (B) in a 0.2% sodium metaphosphate aqueous solution and measuring the dispersion with a particle diameter distribution measuring apparatus ("SediGraph III 5120", manufactured by Micromeritics Instrument Corporation, etc.) by the X-ray gravitational sedimentation method.

In this specification, the "average fiber length" can be determined from a weight average value obtained by measuring the fiber length of 400 inorganic reinforcements (B) as arbitrarily selected through image analysis adopting the electronic microscope method.

The content of the inorganic reinforcement (B) is 8 to 130 parts by mass, preferably 20 to 130 parts by mass, more preferably 30 to 130 parts by mass, still more preferably 40 to 130 parts by mass, yet still more preferably 45 to 110 parts by mass, even yet still more preferably 45 to 90 parts by mass, even still more preferably 45 to 75 parts by mass, and even still more further preferably 50 to 65 parts by mass based on 100 parts by mass of the thermoplastic resin (A).

When the content of the inorganic reinforcement (B) is less than 8 parts by mass, a sufficient reinforcing effect of the inorganic reinforcement (B) is not obtained, and furthermore, a waterproofing effect is not obtained. In addition, when the content of the inorganic reinforcement (B) is more than 130 parts by mass, the melt kneading properties become poor.

### (Olefinic Compound (C))

The thermoplastic resin composition contains a polyolefin (C1) or a long-chain fatty acid-based compound (C2). In this specification, the "polyolefin (C1) or long-chain fatty acid-based compound (C2)" is occasionally referred to as "olefinic compound (C)".

### (Polyolefin (C1))

Specifically, examples of the polyolefin (C1) include polyethylene, polypropylene, a vinyl acetate-ethylene copolymer, and a modified polyolefin of the foregoing polymer resulting from partial oxidation or modification with a reactive functional group derived from maleic acid, maleic anhydride, or the like.

These polyolefins may be either a high-density polyolefin or a low-density polyolefin, and it may also be one resulting from polymerization with a catalyst, such as a metallocene catalyst.

More specifically, among the polyolefins (C1), at least one selected from the group consisting of polyethylene and polypropylene is preferred; at least one selected from the group consisting of modified polyethylene and modified polypropylene, each resulting from partial oxidation or modification with a reactive functional group derived from maleic acid, maleic anhydride, or the like, is more preferred; and at least one selected from polyethylene and polypropylene, each resulting from modification with maleic anhydride, is still more preferred.

In order to enhance the compatibility with the thermoplastic resin (A) and to achieve falling prevention of the polyolefin (C1) from the surface of the insert molded article, improvement of surface properties, and improvement of moldability, the polyolefin (C1) is preferably partially oxidized or modified with a reactive functional group derived from maleic acid, maleic anhydride, or the like. That is, the polyolefin (C1) is preferably a polyolefin having been subjected to at least one modification treatment selected from maleic acid modification, maleic anhydride modification, oxidation, and polar monomer modification, and preferably a polyolefin having been subjected to at least one modification treatment selected from maleic acid modification, oxidation, and polar monomer modification.

Since an elastomer or an ionomer occasionally lowers the heat resistance and the mechanical strength of molded articles or increases a burr of insert molded articles, it is preferred that such an elastomer or an ionomer is not contained.

### (Long-Chain Fatty Acid-based Compound (C2))

The long-chain fatty acid-based compound (C2) is preferably a long-chain fatty acid compound having 15 or more carbon atoms, and examples thereof include metal salts of calcium, etc. or esters of a higher fatty acid, such as palmitic acid, stearic acid, behenic acid, montanic acid, and rice bran wax, and mixtures thereof.

Among the long-chain fatty acid-based compounds (C2), at least one selected from the group consisting of a metal salt or ester of a saturated aliphatic monocarboxylic acid having 15 or more carbon atoms, and a mixture thereof is preferred; at least one selected from the group consisting of a metal salt or ester of a saturated aliphatic monocarboxylic acid having 20 or more carbon atoms, and a mixture thereof is more preferred; and at least one selected from the group consisting of a metal salt or ester of montanic acid and a mixture thereof is still more preferred.

In addition, the long-chain fatty acid-based compound (C2) is also preferably a long-chain fatty acid-based compound that is a long-chain fatty acid compound having 15 or more carbon atoms and having been subjected to at least one modification treatment selected from esterification, maleic acid modification, and saponification.

In the long-chain fatty acid-based compound (C2), an upper limit of the carbon number may be in a range where the effects of the present invention are not impaired; however, from the viewpoint of availability of raw materials, it may be 40 or less.

The content of each of the polyolefin (C1) and the long-chain fatty acid-based compound (C2) is 1.0 to 40 parts by mass, preferably 1.5 parts by mass or more, and more preferably 2.0 parts by mass or more, and it is preferably 30 parts by mass or less, and more preferably 25 parts by mass or less, based on 100 parts by mass of the thermoplastic resin (A).

When the content of each of the polyolefin (C1) and the long-chain fatty acid-based compound (C2) is less than 1.0 part by mass, a sufficient waterproofing effect is not obtained. In addition, when the aforementioned content is more than 40 parts by mass, the moldability of the thermoplastic resin composition is inferior.

### (Other Components)

The thermoplastic resin composition which is used in the present invention may further contain other components than the thermoplastic resin (A), the inorganic reinforcement (B), and the olefinic compound (C), such as a release agent, an antioxidant, a heat stabilizer, a photostabilizer, a styrene-maleic anhydride copolymer (SMA), a lubricant, a nucleating agent, a crystallization retarder, a hydrolysis inhibitor, an antistatic agent, a radical inhibitor, a matting agent, a UV absorber, a flame retardant, a drip-preventing agent, a sliding property-imparting agent, and other inorganic materials than the inorganic reinforcement (B), within a range where the effects of the present invention are not impaired.

Examples of the inorganic material include inorganic materials other than those used as the inorganic reinforcement, for example, carbon nanotube, fullerene, talc, zeolite, sericite, kaolin, clay, pyrophyllite, silica, bentonite, alumina silicate, silicon oxide, magnesium oxide, alumina, zirconium oxide, titanium oxide, iron oxide, calcium carbonate, magnesium carbonate, dolomite, calcium sulfate, barium sulfate, calcium hydroxide, magnesium hydroxide, aluminum hydroxide, a glass powder, ceramic beads, boron nitride, silicon carbide, carbon black, graphite, and various clay minerals, e.g., halloysite and vermiculite.

The content of the other component in the thermoplastic resin composition can be, for example, set to 50% by mass or less, and it is preferably 20% by mass or less, more preferably 10% by mass or less, still more preferably 5% by mass or less, and yet still more preferably 3% by mass or less.

The total content of the thermoplastic resin (A), the inorganic reinforcement (B), and the olefinic compound (C) in the thermoplastic resin composition is, for example, preferably 50% by mass or more, more preferably 80% by mass or more, still more preferably 90% by mass or more, and yet still more preferably 95% by mass or more.

### (Metal Component)

The metal constituting the metal component which is used in the present invention is not particularly limited so long as it is able to undergo insert molding. Examples thereof include aluminum, copper, iron, tin, nickel, zinc, and an alloy, such as a copper alloy, an aluminum alloy, and stainless steel. The surface of such a metal may be plated with aluminum, tin, nickel, gold, silver, zinc, tin, or the like.

### (Waterproof Component)

It is possible to produce a waterproof component by, for example, a method of subjecting a thermoplastic resin composition and a metal component to insert molding or the like, wherein
the thermoplastic resin composition contains a thermoplastic resin (A), an inorganic reinforcement (B), and a polyolefin (C1) or a long-chain fatty acid-based compound (C2),
the thermoplastic resin composition being obtained through melt kneading of the inorganic reinforcement (B) in a use amount of 8 to 130 parts by mass and the polyolefin (C1) or the long-chain fatty acid-based compound (C2) in a use amount of 1.0 to 4.0 parts by mass based on 100 parts by mass of the thermoplastic resin (A).

On performing the insert molding, an arbitrary method known as the insert molding method, for example, an injection insert molding method and a compression insert molding method, can be adopted.

After the insert molding, processing by an ultrasonic welding method, a laser welding method, a vibration welding method, a thermal welding method, a hot melt method, or the like may be further performed, as the need arises.

In component mounting for mounting an electronic component on a printed circuit board, an insert mounting process of performing welding through dipping in a molten solder tank (dipping tank) has hitherto been applied. Meanwhile, according to surface mounting, the usage of which is recently expanding, a solder paste is printed on a printed wiring board, and an electronic component is then mounted thereon, followed by heating in a reflow furnace generally at about 260°C to melt the solder, thereby joining the printed wiring substrate and the electronic component to each other. According to the surface mounting, downsizing or improvement in productivity of the printed circuit board can be achieved; however, in the mounted component, in the reflow process and the sequent cooling process, a stress is generated according to a difference in the expansion and shrinkage characteristics between the metal component and the resin or resin composition, and a minute gap is liable to be generated between the metal component and the resin or resin composition, so that it is difficult to maintain the waterproofness. According to the waterproof component of the present invention, in view of the fact that even after the heating process, such as the reflow process, deformation is hardly caused, and therefore, it is preferred to use the waterproof component of the present invention for an application to be applied in a surface mounting process in which such a reflow process id adopted. The heating process, such as the reflow process, may be applied several times, as the need arises.

Since the waterproof component of the present invention is excellent in waterproofness, it is useful as an external connection terminal, such as FPC connector, BtoB connector, card connector, SMT connector (e.g., coaxial connector), and memory card connector; an SMT relay; an SMT bobbin; a socket, such as memory socket and CPU socket; a switch, such as a command switch and an SMT switch; a sensor, such as rotation sensor and acceleration sensor; and so on. Above all, the waterproof component of the present invention is useful as a switch or an external connection terminal of an electronic device, and especially useful as a switch.

In the case of using the waterproof component of the present invention as a switch, when the external dimensions of an insert molded body formed from the thermoplastic resin composition and the metal component are defined as (width) × (depth) × (thickness), the width is preferably 15 mm or less, more preferably 10 mm or less, and still more preferably 5 mm or less; the depth is preferably 50 mm or less, more preferably 25 mm or less, and still more preferably 5 mm or less; and the thickness is preferably 50 mm or less, more preferably 15 mm or less, and still more preferably 3 mm or less. The depth of the external dimensions is regulated to be longer than the width.

When the waterproof component of the present invention is used especially as a switch or an external connection terminal, the electronic device can be effectively made waterproof.

Examples of the electronic device provided with the waterproof component of the present invention include portable electronic devices, such as a digital camera and a smartphone, but it should be construed that the present invention is not limited thereto.

That is, the present invention is also able to provide a waterproofing method using an insert molded body composed of the aforementioned thermoplastic resin composition and the metal component and use for waterproofing an insert molded body.

### Examples

The present invention is hereunder described in more detail by reference to Examples, but it should be construed that the present invention is by no means limited by these Examples.

A melting point and a glass transition temperature of the thermoplastic resin (A) used in each of the Examples and Comparative Examples were measured according to the following methods.

### (Melting Point and Glass Transition Temperature of Thermoplastic Resin (A))

The melting point of polyamide (PA9T as mentioned later) used as the thermoplastic resin (A) was determined when a peak temperature of a melting peak appearing at the time of raising the temperature from 30°C to 360°C at a rate of 10°C/min in a nitrogen atmosphere by using a differential scanning calorimeter (DSC7020), manufactured by Hitachi High-Tech Science Corporation was defined as a melting point (°C). In the case where plural melting peaks appeared, a peak temperature of melting peak on the highest temperature side was defined as the melting point.

Thereafter, the sample was held at a temperature of 30°C higher than the melting point for 10 minutes and completely molten, and then cooled to 40°C at a rate of 10°C/min, followed by holding at 40°C for 10 minutes. Again, when the temperature was raised to a temperature of 30°C higher than the melting point at a rate of 10°C/min, an intermediate point at which the DSC curve changed stepwise was defined as the glass transition temperature.

### [Examples 1 to 12 and Comparative Examples 1 to 4]

Into a twin-screw extruder, manufactured by PLABOR Research Laboratory of Plastics Technology Co., Ltd. (screw diameter: 32 mmϕ, L/D = 30, rotation rate: 150 rpm, discharge rate: 10 kg/h), the thermoplastic resin (A), the olefinic compound (C), and other components shown in Table 1 were fed from a hopper of an uppermost stream part, and the inorganic reinforcement (B) shown in Table 1 was further fed from a side feeder, followed by melt kneading. The melt-kneaded thermoplastic resin composition was extruded in a strand form, cooled, and then cut, to obtain pellets of the thermoplastic resin composition. In Table 1, all of the amounts of the thermoplastic resin (A), the inorganic reinforcement (B), the olefinic compound (C), and the other components mean "parts by mass".

Using those pellets, the evaluation as a molded article (insert molded article) was performed by the following method.

### [Red Ink Test (Waterproofing Test)]

Using an injection molding machine TR40EH, manufactured by Sodick Co., Ltd., the thermoplastic resin composition obtained in each of the Examples and Comparative Examples was subjected to injection molding in a box shape (external dimensions: 2.8 mm in width, 3.0 mm in depth, and 1.3 mm in thickness) on an LED lead frame which had been subjected to silver plating on a copper matrix, at a maximum temperature of 320°C and a die temperature of 140°C and at an injection speed of 100 to 200 mm/s. Using a sample prepared by thermally treating twice the above-obtained tabular molded article with a reflow apparatus having a maximum attained temperature of 260°C under the following reflow condition, the following red ink test was carried out.

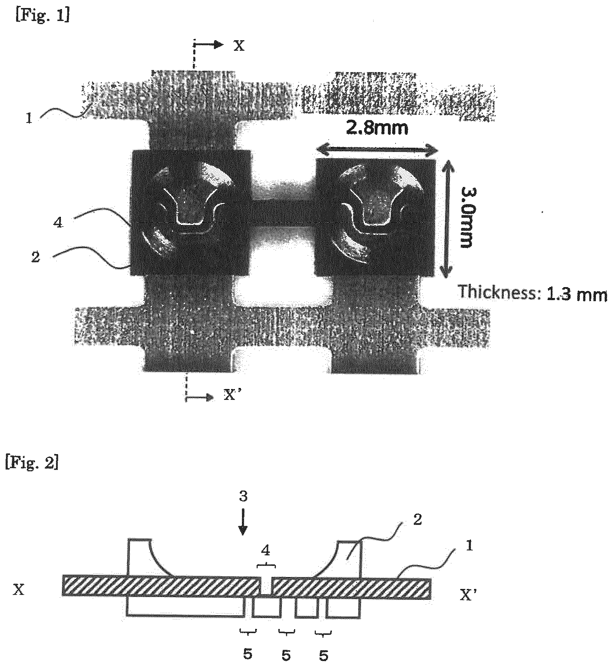

Here, Fig. 1 is a photograph of the aforementioned sample. In addition, Fig. 2 is a schematic view illustrating an X-X' line cross-sectional view of the sample photograph of Fig. 1. As illustrated in Fig. 2, the aforementioned sample is an insert molded body composed of an LED lead frame 1 and a box shape 2 formed of a thermoplastic resin composition and has a depression 3 for ink dripping for the purpose of using for the red ink test. The foregoing depression portion has an unconnected portion 4 in which not only a part of the LED lead frame is exposed, but also a part of the LED lead frame lacks. In addition, though the box shape 2 has gaps 5 on the rear side (surface not having the depression 3), the unconnected portion 4 does not superimpose the gaps 5. In the photograph of Fig. 1, a ring-shaped portion is shown in the box shape 2; however, this is seen in the ring shape while a curved part of the thermoplastic resin composition reflects light.

### (Reflow Condition):

The sample was subjected to temperature rise from 25°C to 150°C over 60 seconds, subsequently subjected to temperature rise to 180°C over 90 seconds, and further subjected to temperature rise to 260°C over 60 seconds. Thereafter, the sample was held at 260°C for 20 seconds and then cooled from 260°C to 100°C over 30 seconds, and after reaching 100°C, the resulting sample was enclosed with air and then naturally cooled to 23°C.

### (Red Ink Test):

A red ink (ink for fountain pen "INK-30-RED", manufactured by PILOT Corporation) was dripped in the depression portion of the box shape formed of the thermoplastic resin composition, and after allowing to stand for 10 minutes, the ink was removed. Then, the box shape (thermoplastic resin composition) was removed from the LED lead frame to confirm whether or not the ink attached to the rear side of the LED lead frame that is opposite to the ink dripping side.

The case where the ink did not attach to the rear side of the LED lead frame was judged to be "not leaked". In addition, the case where the ink attached to the rear side of the LED lead frame was judged to be "leaked".

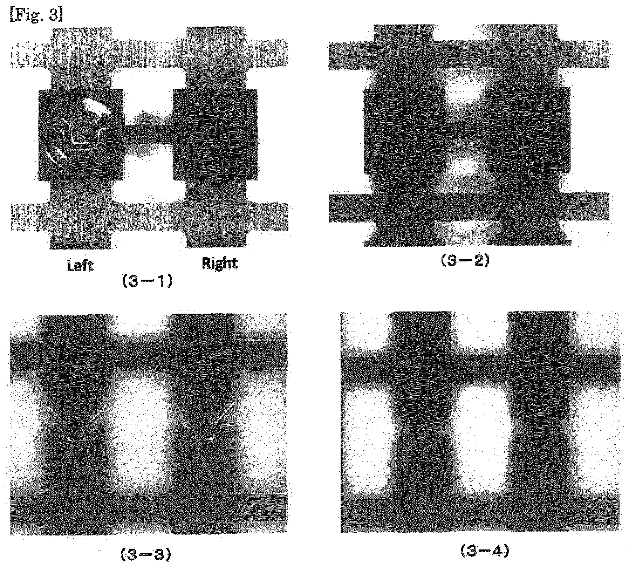

(3-1) of Fig. 3 is a photograph of the sample surface, and the left is before dripping of the red ink, whereas the right is after dripping of the red ink. (3-2) of Fig. 3 is a photograph of the rear surface of the sample before dripping of the red ink. (3-3) of Fig. 3 is a photograph showing the results of Example 1 which was judged to be "not leaked" in the red ink test. (3-4) of Fig. 3 is a photograph showing the results of Comparative Example 1 which was judged to be "leaked".

**Table 1**

| | | Example | | | | | | | | | | | | Comparative Example | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 | 4 |
| Thermoplastic resin (A) | PA9T | 100 | 100 | 100 | 100 | 100 | 100 | 100 | 100 | 100 | 100 | 100 | 100 | 100 | 100 | 100 | 100 |
| Inorganic reinforcement (B) | Wollastonite | 63.6 | 58.3 | 56.5 | 54.7 | 63.6 | 58.3 | 63.6 | 58.3 | 63.6 | 58.3 | 58.3 | 58.3 | 53.8 | 77.8 | 54.3 | 54.3 |
| Polyolefin (C1) | Polyolefin-1 | 18.2 | 8.3 | 4.8 | 1.6 | | | | | | | | | | 44.4 | 0.8 | |
| | Polyolefin - 2 | | | | | 18.2 | 8.3 | | | | | | | | | | |
| | Polyolefin - 3 | | | | | | | | | | | 8.3 | | | | | |
| | Maleic acid -modified polyolefin-1 | | | | | | | 18.2 | 8.3 | | | | | | | | 0.8 |
| | Maleic acid-modified polvolefin-2 | | | | | | | | | 18.2 | 8.3 | | | | | | |
| Long-chain fatty acid-based compound (C2) | Partially saponified ester wax | | | | | | | | | | | | 8.3 | | | | |
| Other component | Antioxidant-1 | 0.2 | 0.2 | 0.2 | 0.2 | 0.2 | 0.2 | 0.2 | 0.2 | 0.2 | 0.2 | 0.2 | 0.2 | | 0.2 | 0.2 | 0.2 |
| | Antioxidant-2 | 0.2 | 0.2 | 0.2 | 0.2 | 0.2 | 0.2 | 0.2 | 0.2 | 0.2 | 0.2 | 0.2 | 0.2 | | 0.2 | 0.2 | 0.2 |
| | Antioxidant-3 | | | | | | | | | | | | | 0.3 | | | |
| | Release agent-1 | 0.5 | 0.5 | 0.5 | 0.5 | 0.5 | 0.5 | 0.5 | 0.5 | 0.5 | 0.5 | 0.5 | 0.5 | 0.3 | 0.7 | 0.5 | 0.5 |
| | Release agent-2 | | | | | | | | | | | | | | | | |
| | Nucleating agent | 1.8 | 1.7 | 1.6 | 1.6 | 1.8 | 1.7 | 1.8 | 1.7 | 1.8 | 1.7 | 1.7 | 1.7 | 1.5 | 2.2 | 1.6 | 1.6 |
| Red ink test | | Not leaked | Not leaked | Not leaked | Not leaked | Not leaked | Not leaked | Not leaked | Not leaked | Not leaked | Not leaked | Not leaked | Not leaked | Leaked | Molding impossible | Leaked | Leaked |

The respective components shown in Table 1 are as follows.

### [Thermoplastic Resin (A)]

• PA9T:
"GENESTAR GC51010", manufactured by Kuraray Co., Ltd., PA9T (polyamide in which the dicarboxylic acid unit is a terephthalic acid unit, and the diamine unit is a 1,9-nonanediamine unit and a 2-methyl-1,8-octanediamine unit (molar ratio: 85/15), melting point: 305°C, glass transition temperature: 125°C

### [Inorganic Reinforcement (B)]

• Wollastonite:
"SH1250", manufactured by Kinsei Matec Co., Ltd., average fiber diameter: 5.3 µm, average fiber length: 85 µm, aspect ratio = 16/1

### [Olefinic Compound (C)]

### (Polyolefin (C1))

• Polyolefin-1:
"LICOCENE PP6102", manufactured by Clariant Chemicals Ltd., polypropylene wax

• Polyolefin-2:
"LICOCENE PE190", manufactured by Clariant Chemicals Ltd., polyethylene wax

• Polyolefin-3:
"HI WAX NP055", manufactured by Mitsui Chemicals, Inc., polypropylene wax

• Maleic acid-modified polyolefin-1:
"LICOCENE PP MA6252", manufactured by Clariant Chemicals Ltd., polypropylene wax modified with maleic anhydride

• Maleic acid-modified polyolefin-2:
"LICOCENE PE MA4221", manufactured by Clariant Chemicals Ltd., polyethylene wax modified with maleic anhydride

### (Long-Chain Fatty Acid-based Compound (C2))

• Partially saponified ester wax:
"LICOWAX OP", manufactured by Clariant Chemicals Ltd., partially saponified ester wax with montanic acid (carbon number: 28)

### [Other Component]

• Antioxidant-1:
"Irganox 1098", manufactured by BASF Japan Ltd.

• Antioxidant-2:
"Irgafos 168", manufactured by BASF Japan Ltd.

• Antioxidant-3:
"SUMILIZER GA-80", manufactured by Sumitomo Chemical Co., Ltd.

• Release agent-1:
High-density polyethylene "HI WAX 200P", manufactured by Mitsui Chemicals, Inc.

• Release agent-2:
High-density polyethylene "HI WAX NP055", manufactured by Mitsui Chemicals, Inc.

• Nucleating agent:
Carbon Black "#980B", manufactured by Mitsubishi Chemical Corporation

In Example 1, as shown in (3-3) of Fig. 3, the red ink did not attach to the rear surface of the LED lead frame after removing the resin composition. It is noted that in Example 1, even after the reflow process, a gap was not generated between the LED lead frame and the thermoplastic resin composition, and the insert molded body with excellent waterproofness was obtained. In addition, it is noted that in Examples 2 to 12, the same results as in Example 1 were obtained, and the insert molded bodies with excellent waterproofness were obtained.

On the other hand, in Comparative Example 1, as shown in (3-4) of Fig. 3, the red ink attached to the rear surface of the LED lead frame after removing the resin composition. That is, in Comparative Example 1, since the thermoplastic resin composition did not contain the olefinic compound (C), it may be considered that by going through the reflow process, a gap was generated between the LED lead frame and the thermoplastic resin composition, and the red ink came thereinto from the unconnected portion 4, to cause leakage of the red ink, resulting in inferior waterproofness. In addition, in Comparative Example 2, since the content of the olefinic compound (C) in the thermoplastic resin composition was too large, it was impossible to undergo the insert molding because of molding failure. On the other hand, in Comparative Examples 3 and 4, since the content of the olefinic compound (C) in the thermoplastic resin composition was too small, similar to Comparative Example 1, after the reflow process, a gap was generated between the LED lead frame and the thermoplastic resin composition, resulting in inferior waterproofness.

In consequence, it is noted that from comparison between the Examples and the Comparative Examples, the waterproof component of the present invention is excellent with respect to the waterproofness after the reflow process.

### Industrial Applicability

In accordance with the present invention, it is possible to provide a waterproof component that is an insert molded body, which has sufficient waterproofness even after a heating process, such as a reflow process. The waterproof component is useful especially as an external connection terminal, etc. of an electronic device.

### Reference Signs List

1: LED lead frame (metal component)
2: Box shape formed of thermoplastic resin composition
3: Depression for ink dripping
4: Unconnected portion of LED lead frame
5: Gap

## Claims

1. A waterproof component that is an insert molded body formed from a thermoplastic resin composition and a metal component, wherein
the thermoplastic resin composition comprises a thermoplastic resin (A), an inorganic reinforcement (B), and a polyolefin (C1) or a long-chain fatty acid-based compound (C2); and
the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).

2. The waterproof component according to claim 1, wherein the polyolefin (C1) is a polyolefin having been subjected to at least one modification treatment selected from maleic acid modification, oxidation, and polar monomer modification.

3. The waterproof component according to claim 1 or 2, wherein the long-chain fatty acid-based compound (C2) is a long-chain fatty acid compound having 15 or more carbon atoms.

4. The waterproof component according to any of claims 1 to 3, wherein the long-chain fatty acid-based compound (C2) is a long-chain fatty acid compound having 15 or more carbon atoms, which is a long-chain fatty acid-based compound having been subjected to at least one modification treatment selected from esterification, maleic acid modification, and saponification.

5. The waterproof component according to any of claims 1 to 4, wherein a melting point of the thermoplastic resin (A) is 280°C or higher.

6. The waterproof component according to any of claims 1 to 5, wherein the thermoplastic resin (A) is at least one selected from the group consisting of a polyamide, a liquid crystal polymer, a polyphenylene sulfide, and a styrenic polymer having a mainly syndiotactic structure.

7. The waterproof component according to any of claims 1 to 6, wherein the thermoplastic resin (A) is a polyamide in which 50 to 100 mol% of a diamine unit thereof is an aliphatic diamine unit having 4 to 18 carbon atoms.

8. The waterproof component according to any of claims 1 to 7, wherein the inorganic reinforcement (B) is at least one selected from the group consisting of a glass fiber, a milled fiber, wollastonite, mica, a glass flake, and glass beads.

9. The waterproof component according to any of claims 1 to 8, wherein the inorganic reinforcement (B) is at least one selected from the group consisting of a milled fiber, wollastonite, and mica.

10. The waterproof component according to any of claims 1 to 9, which is used for an application to be applied in a surface mounting process.

11. The waterproof component according to any of claims 1 to 10, which is an external connection terminal.

12. The waterproof component according to any of claims 1 to 11, which is a switch.

13. An electronic device provided with the waterproof component according to any of claims 1 to 12.

14. The electronic device according to claim 13, which is a portable electronic device.

15. A waterproofing method using an insert molded body formed from a thermoplastic resin composition and a metal component, the method comprising using a thermoplastic resin composition, wherein
the thermoplastic resin composition contains a thermoplastic resin (A), an inorganic reinforcement (B), and a polyolefin (C1) or a long-chain fatty acid-based compound (C2); and
the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).

16. Use for waterproofing an insert molded body formed from a thermoplastic resin composition and a metal component, wherein
the thermoplastic resin composition contains a thermoplastic resin (A), an inorganic reinforcement (B), and a polyolefin (C1) or a long-chain fatty acid-based compound (C2); and
the content of the inorganic reinforcement (B) is 8 to 130 parts by mass, and the content of the polyolefin (C1) or the long-chain fatty acid-based compound (C2) is 1.0 to 40 parts by mass, based on 100 parts by mass of the thermoplastic resin (A).

17. A method for waterproofing an electronic device, comprising using the waterproof component according to any of claims 1 to 12 as an external connection terminal.

18. A method for waterproofing an electronic device, comprising using the waterproof component according to any of claims 1 to 12 as a switch.

19. A method for producing a waterproof component, comprising subjecting a thermoplastic resin composition and a metal component to insert molding, wherein
the thermoplastic resin composition contains a thermoplastic resin (A), an inorganic reinforcement (B), and a polyolefin (C1) or a long-chain fatty acid-based compound (C2),
the thermoplastic resin composition being obtained through melt kneading of the inorganic reinforcement (B) in a use amount of 8 to 130 parts by mass and the polyolefin (C1) or the long-chain fatty acid-based compound (C2) in a use amount of 1.0 to 40 parts by mass based on 100 parts by mass of the thermoplastic resin (A).
